(19) Europäisches Patentamt
European Patent Office
Office européen des brevets

(11) EP 0 681 865 B1

# (12) EUROPÄISCHE PATENTSCHRIFT

(45) Veröffentlichungstag und Bekanntmachung des Hinweises auf die Patenterteilung:
**08.03.2000 Patentblatt 2000/10**

(21) Anmeldenummer: **95106224.9**

(22) Anmeldetag: **26.04.1995**

(51) Int Cl.7: **B01F 17/42**, A01N 25/30, D06L 3/02, D06L 1/14, D06P 1/60, B01F 17/00, D06P 1/613

## (54) Schaumarmes Netzmittel und seine Verwendung

Low foam surfactant and use thereof

Tensioactif peu moussant et son application

(84) Benannte Vertragsstaaten:
**DE FR GB IT**

(30) Priorität: **09.05.1994 DE 4416303**

(43) Veröffentlichungstag der Anmeldung:
**15.11.1995 Patentblatt 1995/46**

(73) Patentinhaber: **BAYER AG**
**51368 Leverkusen (DE)**

(72) Erfinder: **Hoffarth, Gunther, Dr.**
**D-51381 Leverkusen (DE)**

(56) Entgegenhaltungen:
**DE-A- 4 212 592**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 681 865 B1

## Beschreibung

Die Erfindung betrifft schaumarme Netzmittel, die aus einem Gemisch von Ethoxylaten bzw. gemischten Ethoxylat-propoxylaten einerseits und reinen Propoxylaten andererseits von Alkoholen bestehen. Die Erfindung besteht ferner in der Verwendung solcher Netzmittel zum Einsatz in wäßrigen Flotten bei textilen Prozessen.

Als Netzmittel werden seit langem anionische, kationische und nichtionische Tenside einzeln oder in Kombination miteinander eingesetzt. Als nichtionische Tenside kommen in der Hauptsache Alkoxylate von längerkettigen, beispielsweise aus der Fettchemie stammenden Alkoholen oder von Phenolen in Frage, zu deren Herstellung solche Alkohole oder Phenole mit Ethylenoxid (EO) oder Ethylenoxid/Propylenoxid (EO/PO) umgesetzt werden. Es ist bekannt, daß Ethoxylate sehr stark schäumende nichtionische Netzmittel darstellen. Es ist weiterhin bekannt, daß reine Propoxylate, die, grundsätzlich bekannt sind, ab einer bestimmten Kettenlänge des hydrophoben Alkylteils in Wasser im wesentlichen unlöslich sind. Diese Grenze ist etwa bei 5 bis 6 C-Atomen im Alkylteil gegeben. Solche Propoxylate sind demnach als Netzmittel in wäßrigen Systemen nicht einsetzbar.

Um die bei vielen Einsatzzwecken unerwünschte starke Schaumbildung zurückzudrängen, hat es nicht an Versuchen gefehlt, diese Schaumwirkung mit Hilfe von Zusätzen, wie Silikonverbindungen, Phosphorverbindungen u. a., zurückzudrängen. Es wurde weiterhin versucht, insbesondere langkettige Alkohole mit Ethylenoxid und Propylenoxid in unterschiedlicher Reihenfolge umzusetzen. Hierbei wurden zwar schaumärmere Produkte erhalten, aber die übrigen anwendungstechnischen Eigenschaften, wie Netzwirkung, Alkalistabilität und Schaumverhalten, wurden dadurch in Mitleidenschaft gezogen.

Es wurden neue schaumarme Netzmittel gefunden, die aus

I) 40 bis 70 Gew.-% eines oder mehrerer Stoffe der Formel

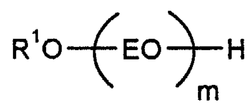

(Ia) ,

und/oder

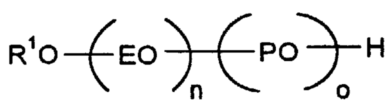

(Ib),

und/oder

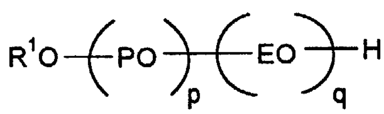

(Ic),

II) 60 bis 30 Gew.-% eines oder mehrerer Stoffe der Formel

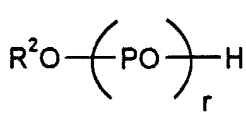

(II) ,

und

III) 0 bis 20 Gew.-% eines oder mehrerer Stoffe der Formel

$$R^3O-(EO)_s-H \qquad (III)$$

bestehen, wobei sich alle Prozentangaben auf das Gesamtgewicht des Netzmittels beziehen und wobei

| | |
|---|---|
| $R^1$ und $R^2$ | unabhängig voneinander geradkettiges oder verzweigtes $C_4$-$C_{20}$-Alkyl, $C_4$-$C_{20}$-Alkenyl oder $C_5$-$C_8$-Cycloalllyl bedeuten, |
| $R^3$ | geradkettiges oder verzweigtes $C_{12}$-$C_{22}$-Alkyl, oder $C_{12}$-$C_{22}$-Alkenyl bedeutet, |
| EO bzw. PO | Ethylenoxid- bzw. Propylenoxid-Einheiten bedeuten, |
| m und r | unabhängig voneinander Zahlen von 1-30, bevorzugt 1 bis 20 darstellen, |
| n, o, p und q | unabhängig voneinander Zahlen von 1 bis 10 darstellen und |
| s | eine Zahl von 15 bis 50 darstellt, |

und in welchem weiterhin die Komponente I) eine Hydrophilic-Lipophilic-Balance HLB im Bereich von 8 bis 16 aufweist.

Es ist überraschend, daß die wasserunlöslichen Propoxylate der Formel (II) im Verein mit den Alkoxylaten der Formel (Ia) und/oder (Ib) und/oder (Ic) wasserdispergierbare Netzmittel ergeben, die sich durch ihre Schaumarmut auszeichnen. Der Einsatz von reinen Propoxylaten, der aufgrund der obengenannten unzureichenden Wasserlöslichkeit für die genannten Zwecke nicht möglich erschien, ergibt Vorteile und Vereinfachungen bei der Herstellung der erfindungsgemäßen Netzmittel. Reste $R^1$, $R^2$ und $R^3$ mit 4 bis 20 C-Atomen bzw. 12 bis 22 C-Atomen sind dem Fachmann bekannt. Die längerkettigen Reste sind z.B. aus der Fettchemie bekannt; dies betrifft insbesondere solche mit geraden C-Anzahlen und solche, die geradkettig, also nicht verzweigt sind. Daneben haben (synthetische) Alkohole große Bedeutung, in denen die Reste $R^1$, $R^2$ bzw. $R^3$ geradkettig oder verzweigt sind und geradzahlige oder ungeradzahlige C-Anzahlen besitzen.

$C_4$-$C_{20}$- bzw. $C_{12}$-$C_{22}$-Alkyl ist beispielsweise Butyl, i-Butyl, Pentyl, i-Pentyl, Neopentyl, Hexyl, i-Hexyl, Octyl, i-Octyl, 2-Ethyl-hexyl, Nonyl, i-Nonyl, Decyl, Dodecyl, i-Dodecyl, Lauryl, Palmityl, Stearyl, Eicosyl, Heneicosyl, Docosyl. Alkenyl gleicher C-Atomzahl unterscheidet sich vom entsprechenden Alkyl durch das Vorliegen einer Doppelbindung.

$C_5$-$C_8$-Cycloalkyl ist beispielsweise Cyclopentyl, Cyclohexyl, Methyl-cyclopentyl, Cycloheptyl, Methyl-Cyclohexyl, Dimethyl-cyclopentyl, Cyclooctyl, Dimethylcyclohexyl, Trimethyl-cyclopentyl, Ethyl-cyclohexyl.

Bevorzugte Stoffe der Gruppen I) und II) sind solche, in denen $R^1$ und $R^2$ unabhängig voneinander $C_8$-$C_{16}$-Alkyl, bedeuten.

Besonders bevorzugte Stoffe der Gruppen I) und II) sind solche, in denen $R^1$ und $R^2$ unabhängig voneinander $C_{10}$-$C_{14}$-Alkyl bedeuten.

Bevorzugte Stoffe der Gruppe III) sind solche, in denen $R^3$ $C_{14}$-$C_{20}$-Alkyl oder $C_{14}$-$C_{20}$-Alkenyl bedeutet.

Verbindungen der Formeln (Ia) und/oder (Ib) und/oder (Ic), (II) und (III) können in einer dem Fachmann bekannten Weise durch Reaktion von Ethylenoxid bzw. Propylenoxid mit aliphatischen Alkoholen oder Cycloalkanolen hergestellt werden. Zugrundeliegende Alkohole oder Cycloalkanole sind solche nativen oder technischen Ursprungs, wie Butanol, i-Butanol, Pentanol, i-Pentanol, Hexanol, i-Hexanol, Octanol, i-Octanol, 2-Ethyl-hexanol-1, Trimethylhexanol, die isomeren Decanole, Undecanole, Dodecanole und weitere geradkettige und verzweigte Homologe bis hin zum Eicosanol bzw. Docosanol, Cyclohexanol, Octenol und andere ungesättigte Alkohole.

Die erfindungsgemäßen schaumarmen Netzmittel bestehen aus 40 bis 70 Gew.-% an I), 30 bis 60 Gew.-% an II) und 0 bis 20 Gew.-% an III).

Weiterhin bevorzugt sind solche erfindungsgemäßen Netzmittel, in denen die Komponente I) nur aus einem oder mehreren Stoffen der Formel (Ia) besteht.

Weiterhin besteht bei der Komponente I) zwischen der C-Anzahl und dem Index m ein solcher Zusammenhang, daß die Hydrophilic-Lipophilic-Balance HLB im Bereich von 8 bis 16, bevorzugt im Bereich von 9 bis 15 liegt. Die HLB wird hierbei nach folgender Formel berechnet:

$$HLB = \frac{\text{Masse der EO-Einheiten}}{\text{Gesamtmasse des Ethoxylats}} \cdot 20$$

Im Beispiel eines Decylalkohols, der mit durchschnittlich 6 EO-Einheiten umgesetzt worden ist ergibt sich hierbei folgender Wert:

$$HLB = \frac{6 \times 44{,}05}{158{,}58 + 6.44{,}05} \cdot 20 = 12{,}51$$

44,05 = Molgewicht EO
158,28 = Molgewicht $C_{10}H_{21}OH$

Die Indices m bis s stellen in einer dem Fachmann bekannten Weise Durchschnittswerte dar und können somit auch Zwischenwerte zwischen ganzen Zahlen darstellen. So enthält im obigen Rechenbeispiel ein Ethoxylat mit durchschnittlich 6 EO-Einheiten auch geringe Anteile an Ethoxylaten mit geringerer Zahl (beispielsweise 5 oder nur 4) bzw. mit größerer Zahl (beispielsweise 7 oder 8) EO-Einheiten.

Die erfindungsgemäßen schaumarmen Netzmittel bestehen gemäß obiger Beschreibung immer obligatorisch aus Stoffen der Formel (Ia, b, c) und der Formel (II). Es hat sich jedoch herausgestellt, daß für einige Einsatzzwecke ein zusätzlicher Gehalt an Stoffen der Formel (III) günstig ist. Ein solcher Zusatz erhöht die Alkalibeständigkeit der erfindungsgemäßen schaumarmen Netzmittel mit den Komponenten I) und II), ohne daß durch den Zusatz von III) im angegebenen Rahmen die Schaumarmut in unerwünschter Weise nachläßt. Eine solche Alkalifestigkeit kann beispielsweise beim Einsatz der erfindungsgemäßen schaumarmen Netzmittel in alkalischen Bleichprozessen erwünscht sein. In anderen Fällen wird man auf den Zusatz der Komponente III) verzichten können.

Zur Herstellung der erfindungsgemäßen Netzmittel werden die Komponenten I), II) und III) in beliebiger Reihenfolge zusammengegeben und durch Rühren, Kneten oder gleichwirkende Maßnahmen homogenisiert. Danach werden sie auf die weiter unten beschriebene Anwendungsform mit Wasser verdünnt. Für Versand und Vorratshaltung können die Netzmittel als solche oder in Form eines wäßrigen Konzentrats verwendet werden. Da die Netzmittel ohnehin in wäßrigem Medium eingesetzt werden, kann bei ihrer Herstellung für eine vereinfachte Homogenisierung bereits neben I), II) und III) auch Wasser eingesetzt werden, so daß eine Anwendungsform oder ein Konzentrat entsteht.

Die erfindungsgemäßen schaumarmen Netzmittel finden Verwendung zum Einsatz in wäßrigen Flotten bei textilen Prozessen, zur Formulierung von Pflanzenschutzmitteln usw. Der Einsatz in textilen Prozessen ist hierbei besonders wichtig. Solche textilen Prozesse sind beispielsweise die der Färberei und der Vorbehandlung und Nachbehandlung im Zusammenhang mit der Färberei, ferner Bleichprozesse und Prozesse zur Ausrüstung von Textilien, weiterhin bei der Hydrophobierung, der Oleophobierung und der Antistatik-Ausrüstung von Textilien. In bevorzugter Weise werden die erfindungsgemäßen schaumarmen Netzmittel in Prozessen der Textilfärberei und der Vorbehandlung zur Textilfärberei eingesetzt. Anwendungskonzentrationen sind hierbei 0,02 bis 0,5 Gew.-% Netzmittel (Gesamtmenge an I) + II) + III)) in wäßriger Flotte; Versand und Vorratsformen (Konzentrate) enthalten beispielsweise 20 bis 100 Gew.-% an I) + II) + III) (Rest Wasser).

## Beispiele

Die nachfolgend in Gruppe I aufgeführten Netzmittel (Alkylpolyglykolether, Alkylpolyethylenoxidpolypropylenoxid- bzw. Alkylpolypropylenoxidpolyethylenoxidaddukte) sowie die in Gruppe II beschriebenen schaumdämpfenden, synergistisch wirkenden Alkylpolypropylenoxide wurden nach technisch üblichem Verfahren unter KOH-Katalyse bei 140 bis 150°C/l bis 2 bar hergestellt. Als Ausgangsmaterialien wurden im Handel erhältliche Alkohole eingesetzt, so z.B. verzweigte bzw. unverzweigte $C_8$-$C_{16}$-Alkohole.

Gruppe I: Netzmittel mit guter Netzwirkung, die jedoch in der Regel stark schäumen und deshalb unter turbulenten Flottenverhältnissen nicht eingesetzt werden können: (EO = Mol Ethylenoxid, PO = Mol Propylenoxid)

A) iso-Decanol + 4 EO
B) iso-Decanol + 6 EO
C) iso-Decanol + 8 EO
D) n-Decanol + 5 EO
E) n-Decanol + 5 EO + 4 PO
F) n-Decanol + 7 EO + 4 PO
G) iso-Undecanol + 5 EO
H) iso-Dodecanol + 6 EO
I) iso-Tridecanol + 6 EO

J) 2-Ethylhexanol + 8 PO + 6 EO
K) Oleylalkohol + 20 EO

Gruppe II: Alkylpolypropylenoxide (synergistisch wirkende Entschäumer)

a) 2-Ethylhexanol + 2 PO
b) 2-Ethylhexanol + 6 PO
c) 2-Ethylhexanol + 10 PO
d) iso-Octanol + 6 PO
e) iso-Nonanol + 6 PO
f) iso-Decanol + 6 PO
g) iso-Undecanol + 6 PO
h) iso-Dodecanol + 6 PO
i) Cyclohexanol + 8 PO
j) Benzylalkohol + 8 PO
k) (z.Vergleich: Entschäumer auf Basis Kerosin oder Rapsöl)

Die Verbindungen aus Gruppe I wurden zunächst ohne Zusätze, dann in Kombination mit den Substanzen der Gruppe II auf ihre Netzwirkung, auf Schaumverhalten und Flottenstabilität - insbesondere im alkalischen Milieu - untersucht. Die Ergebnisse sind in den Tabellen 1) bis 4) dargestellt und zeigen deutlich die Vorteile der erfindungsgemäßen kombinierten Netzmittel.

Die Netzwirkung wurde geprüft nach DIN 53901 (Tauchnetzverfahren), d.h. gemessen wird die Zeit vom Eintauchen eines genormten Baumwollprüfläppchens bis zum Untersinken in der Testlösung in Sekunden (Einsatzmengen: 1 g Wirksubstanz/l $H_2O$). Rapidnetzer liegen in einem Bereich von 0 bis 10 Sekunden, gute Netzmittel in einem Bereich von 10 bis 20 Sekunden.

Das Schaumverhalten wurde nach der Schlaglochmethode (Schlachter-Dierkes-Methode) geprüft, wobei eine gelochte Metallscheibe, die am Ende eines Metallstößels befestigt ist, in gleichmäßigem Rythmus in der sich in einem Glaszylinder befindenden Testlösung auf und ab bewegt und anschließend der entstandene Schaum beurteilt wird. (Gemessen wird das Schaumvolumen in ml nach 50 Schlägen zum Zeitpunkt 0, sowie nach 1/2, 1, 2 und 3 Minuten. Einsatzemengen: 1 g Wirksubstanz/l Testlösung; im alkalischen Bereich unter Zusatz von 1 g Soda/l Testlösung).

Ein in der Praxis unter Flottenturbulenzen akzeptabler Schaum (z.B. auf JET-Anlagen) sollte 50 bis 100 ml nicht überschreiten, in anderen Anlagen sind bis zu 500 ml noch akzeptabel. Wichtiger noch ist das Zusammenbrechen des entstandenen Schaumes in möglichst kurzer Zeit.

Abkürzungen, die in den Tabellen 1) bis 4) verwendet werden:

$N_1$ Netzzeiten in Sekunden im neutralen Bereich (dest. $H_2O$)
$N_2$ Netzzeiten in Sekunden im alkalischen Bereich (15 ml/l NaOH, 32 Gew.-%)
$N_3$ Netzzeiten in Sekunden bei Zusatz von 40 g Ätznatron/l Testlösung
$S_1$ Schaumvolumen in ml nach 50 Schlägen im neutralen Bereich.
$S_2$ Schaumvolumen in ml nach 50 Schlägen im alkalischen Bereich (Zugabe von 1 g $Na_2CO_3$/l).

Tabelle 1

| Netzwirkung und Schaumverhalten der Tenside nur aus Gruppe I (bekannte nichtionische, stark schäumende Netzmittel) | | | | |
|---|---|---|---|---|
| Substanz | $N_1$ | $N_2$ | $S_1$ | $S_2$ |
| A) | 14 | 18 | *750, 650 | 600, 550 |
| B) | 13 | 17 | 950, 850 | 950, 900 |
| C) | 18 | 23 | 950, 900 | 1000, 950 |
| D) | 12 | 17 | 1000, 950 | 1100, 1000 |
| E) | 13 | 19 | 800, 500 | 750, 600 |

*Erster Wert: Anfangsschaum
Zweiter Wert: Schaumvolumen nach 1/2 Minute

Tabelle 1 (fortgesetzt)

| Netzwirkung und Schaumverhalten der Tenside nur aus Gruppe I (bekannte nichtionische, stark schäumende Netzmittel) | | | | |
|---|---|---|---|---|
| Substanz | $N_1$ | $N_2$ | $S_1$ | $S_2$ |
| F) | 21 | 24 | 900, 800 | 950, 850 |
| G) | 12 | 17 | 700, 650 | 750, 700 |
| H) | 13 | 14 | 800, 750 | 700, 650 |
| I) | 12 | 15 | 700, 650 | 800, 750 |
| J) | 18 | 22 | 650, 600 | 400, 350 |
| K) | > 120 | > 120 | 1000, 950 | 900, 850 |

Tabelle 2

| Erfindungsgemäße Netzmittelkombinationen im Mischungsverhältnis 50:50 (Gewichtsprozent) aus Gruppe I und Gruppe II | | | | |
|---|---|---|---|---|
| Substanz | $N_1$ | $N_2$ | $S_1$ | $S_2$ |
| A/b | 16 | 19 | *Rd, 0 | *Rd, 0 |
| B/b | 13 | 15 | 100, 0 | Rd, 0 |
| C/b | 16 | 17 | 250, 0 | 300, 0 |
| D/b | 12 | 16 | 250, 150 | 200, 100 |
| E/b | 18 | 21 | 100, 0 | 300, 150 |
| F/b | 15 | 17 | 150, Rd | 200, Rd |
| G/b | 14 | 18 | 200, 100 | 150, 100 |
| H/b | 12 | 17 | 250, 150 | 200, 150 |
| I/b | 15 | 18 | 200, 150 | 150, 100 |
| J/b | 19 | 21 | 50, 0 | 100, 0 |
| K/b | 29 | 34 | 150, 50 | 200, 150 |

(*Randschaum)

Die Tabelle 2 zeigt deutlich, daß die erfindungsgemäßen Netzmittelkombinationen in ihrer Netzkraft den Verbindungen der Tabelle 1 absolut gleichwertig, in ihrem Schaumverhalten aber signifikant überlegen sind.

Die Mischungen A/b, B/b und J/b sind auf JET-Apparaten einsetzbar, die Kombination K/b zeigt sowohl in der Netzwirkung als auch im Schaumverhalten gegenüber K allein die deutlichste Verbesserung.

Tabelle 3

| Netzwirkung und Schaumverhalten der erfindungsgemäßen Netzmittel in Abhängigkeit vom Mischungsverhältnis (90:10 bis 20:80) der Verbindungen A/b aus den Produktgruppen I und II. | | | | |
|---|---|---|---|---|
| Substanz (Verhältnis A.b) | $N_1$ | $N_2$ | $S_1$ | $S_2$ |
| A(100 %) | 14 | 18 | 750, 700 | 650, 550 |
| 90:10 | 12 | 14 | 250, 100 | 150, 50 |
| 80:20 | 15 | 17 | 150, 50 | 100, 50 |
| 70:30 | 11 | 13 | 150, Rd | 100, Rd |
| 60:40 | 13 | 16 | 50, 0 | 50, Rd |

Tabelle 3 (fortgesetzt)

| Netzwirkung und Schaumverhalten der erfindungsgemäßen Netzmittel in Abhängigkeit vom Mischungsverhältnis (90:10 bis 20:80) der Verbindungen A/b aus den Produktgruppen I und II. | | | | |
|---|---|---|---|---|
| Substanz (Verhältnis A.b) | $N_1$ | $N_2$ | $S_1$ | $S_2$ |
| 50:50 | 15 | 18 | Rd, 0 | 50, 0 |
| 40:60 | 16 | 19 | Rd, 0 | Rd, 0 |
| 30:70 | 18 | 21 | Rd, 0 | Rd, 0 |
| 20:80 | 27 | 29 | Öltröpfchen | Ölfilm |

Tabelle 3 zeigt deutlich, daß bereits bei einem Mischungsverhältnis A:b wie 90:10 der gewünschte Effekt, nämlich Schaumdämpfung der Netzmittellösung ohne Beeinträchtigung der Netzwirkung eintritt.

Mit zunehmendem Anteil der Alkylpolypropylenoxidkomponente b erhält man - bei gleichbleibend guten Netzzeiten - Lösungen mit einem ausgezeichneten Schaumverhalten (geeignet als Netzmittel für JET-Apparate). Erst bei einem Verhältnis A:b wie 20:80 erhält man instabile Flotten, was konsequent zu einer Verschlechterung der Netzwirkung führt.

Tabelle 4

| Netzwirkung und Schaumverhalten der erfindungsgemäßen Netzmittel-Kombination in Abhängigkeit von der Kohlenwasserstoffkette bzw. der Anzahl der PO-Einheiten von Substanzen der Gruppe II (Beispiel: Substanz B in Mischung mit den Substanzen aus Gruppe II; Mischungsverhältnis 50:50) | | | | |
|---|---|---|---|---|
| Substanz | $N_1$ | $N_2$ | $S_1$ | $S_2$ |
| B (100%) | 13 | 17 | 950, 850 | 950, 900 |
| B/a | 10 | 12 | Rd, 0 | 100, Rd |
| B/b | 13 | 15 | 100, 0 | Rd, 0 |
| B/c | 15 | 16 | 200, 0 | 200, Rd |
| B/d | 19 | 22 | 250, Rd | 200, 0 |
| B/e | 16 | 19 | 100,0 | 150, Rd |
| B/f | 18 | 21 | 100, 0 | 50, 0 |
| B/g | 21 | 23 | 100, 0 | 50, 0 |
| B/h | 22 | 25 | 150, 0 | 100, 0 |
| B/i | 24 | 26 | 200, Rd | 150, Rd |
| B/j | 27 | 29 | 150, Rd | 100, Rd |
| *B/k | 46 | 57[1)] | 250, Rd | 200, 0 |
| | 53 | 68[2)] | 300, 200 | 400, 350 |

[1)] handelsüblicher Entschäumer auf Kerosinbasis.

[2)] handelsüblicher Entschäumer auf Rapsölbasis.

Die Tabelle 4 zeigt, daß sehr gute Ergebnisse mit PO-Derivaten von Alkoholen der Kettenlänge $C_8$- bis $C_{10}$-erzielt werden, wobei auch die Variation der PO-Einheiten einen breiten Bereich zuläßt (siehe B/a, B/b, B/c). Beim Zumischen handelsüblicher Schaumdämpfungsmittel (z.B. auf Basis von Kohlenwasserstoffen oder Fettsäureestern) gelingt eine Schaumdämpfung nur unter gleichzeitiger deutlicher Verschlechterung der Netzwirkung.

Tabelle 5

| Verbesserung der Netzwirkung im stark alkalischen Milieu durch Zusatz von Substanzen der Produktgruppe III zu den in Tabelle 2 aufgeführten Netzmittelkombinationen (Beispiel 2 aus Tabelle 2) | | | |
|---|---|---|---|
| Substanz | $N_1$ | $N_2$ | $N_3$ |
| B/b (Vergleich) | 13 | 15 | 52 |
| 90 % B/b<br>10 % K | 17 | 19 | 36 |
| 80 % B/b<br>20 % K | 20 | 23 | 21 |

Eine Zugabe von mehr als 30 % K bringt keine zusätzliche Verbesserung der Netzwirkung, führt j edoch zu einer deutlichen Verschlechterung im Schaumverhalten.

**Patentansprüche**

**1.** Schaumarmes Netzmittel, bestehend aus

I) 40 bis 70 Gew.-% eines oder mehrerer Stoffe der Formel

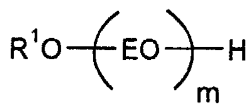

(Ia) ,

und/oder

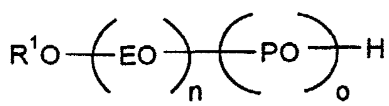

(Ib),

und/oder

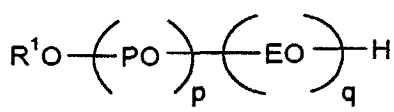

(Ic),

II) 60 bis 30 Gew.-% eines oder mehrerer Stoffe der Formel

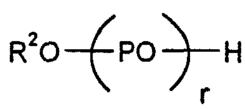

(II) ,

und

III) 0 bis 20 Gew.-% eines oder mehrerer Stoffe der Formel

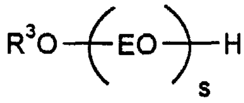 (III)

wobei sich alle Prozentangaben auf das Gesamtgewicht des Netzmittels beziehen und wobei

| | |
|---|---|
| $R^1$ und $R^2$ | geradkettiges oder verzweigtes $C_4$-$C_{20}$-Alkyl, $C_4$-$C_{20}$-Alkenyl, oder $C_5$-$C_8$-Cycloalkyl, bedeuten, |
| $R^3$ | geradkettiges oder verzweigtes $C_{12}$-$C_{22}$-Alkyl oder $C_{12}$-$C_{22}$-Alkenyl bedeutet, |
| EO bzw. PO | Ethylenoxid- bzw. Propylenoxid-Einheiten bedeuten, |
| m und r | unabhängig voneinander Zahlen von 1 bis 30, bevorzugt 1 bis 20 darstellen, |
| n, o, p und q | unabhängig voneinander Zahlen von 1 bis 10 darstellen und |
| s | eine Zahl von 15 bis 50 darstellt, |

und in welchem weiterhin die Komponente I) eine Hydrophilic-Lipophilic-Balance HLB im Bereich von 8 bis 16 aufweist.

**2.** Netzmittel nach Anspruch 1, worin $R^1$ und $R^2$ unabhängig voneinander $C_8$-$C_{16}$-Alkyl bedeuten.

**3.** Netzmittel nach Anspruch 2, worin $R^1$ und $R^2$ unabhängig voneinander $C_{10}$-$C_{14}$-Alkyl bedeuten.

**4.** Netzmittel nach Anspruch 1, worin $R^3$ $C_{14}$-$C_{20}$-Alkyl oder $C_{14}$-$C_{20}$-Alkenyl bedeutet.

**5.** Netzmittel nach Anspruch 1, in welchem die Komponente I) aus einem oder mehreren Stoffen der Formel (Ia) besteht.

**6.** Verwendung der Netzmittel nach Anspruch 1 zum Einsatz in wäßrigen Flotten bei textilen Prozessen der Färberei, der Vorbehandlung und Nachbehandlung im Zusammenhang mit der Färberei, Prozessen des Bleichens, im Zusammenhang mit Ausrüstungsprozessen, bei der Hydrophobierung, bei der Oleophobierung und bei der Antistatik-Ausrüstung.

**7.** Verwendung nach Anspruch 6 zum Einsatz in der Textil-Färberei und der Vorbehandlung und Nachbehandlung zur Textil-Färberei.

## Claims

**1.** Low-foaming wetting agent consisting of

I) 40 to 70% by weight of one or more substances of the formula

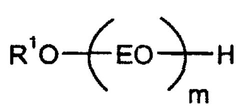 (Ia) ,

and/or

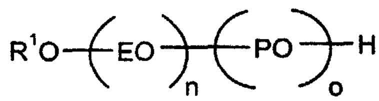 (Ib),

and/or

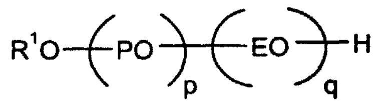 (Ic),

II) 60 to 30% by weight of one or more substances of the formula

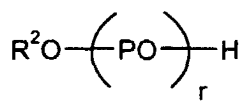 (II) ,

and

III) 0 to 20% by weight of one or more substances of the formula

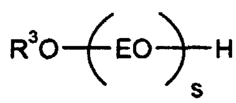 (III)

where all percentages given are based on the total weight of the wetting agent and where

| | |
|---|---|
| $R^1$ and $R^2$ | denote straight-chain or branched $C_4$-$C_{20}$-alkyl, $C_4$-$C_{20}$-alkenyl or $C_5$-$C_8$-cycloalkyl, |
| $R^3$ | denotes straight-chain or branched $C_{12}$-$C_{22}$-alkyl or $C_{12}$-$C_{22}$-alkenyl, |
| EO and PO | denote ethylene oxide and propylene oxide units, respectively, |
| m and r, | independently of one another, are 1 to 30, preferably 1 to 20, |
| n, o, p and q, | independently of one another, are 1 to 10 and |
| s | is 15 to 50, |

and in which, furthermore, component I) exhibits a hydrophilic/lipophilic balance HLB ranging from 8 to 16.

**2.** Wetting agent according to Claim 1, wherein $R^1$ and $R^2$, independently of one another, denote $C_8$-$C_{16}$-alkyl.

**3.** Wetting agent according to Claim 2, wherein $R^1$ and $R^2$, independently of one another, denote $C_{10}$-$C_{14}$-alkyl.

**4.** Wetting agent according to Claim 1, wherein $R^3$ denotes $C_{14}$-$C_{20}$-alkyl or $C_{14}$-$C_{20}$-alkenyl.

**5.** Wetting agent according to Claim 1, in which component I) consists of one or more substances of the formula (Ia).

**6.** Use of the wetting agents according to Claim 1 in aqueous liquors used in textile processes of dyeing, pre-treatment and after-treatment in conjunction with dyeing, processes of bleaching, in conjunction with finishing processes, in water-repellent finishing, in oil-repellent finishing and in antistatic finishing.

**7.** Use according to Claim 6 in textile dyeing and the pre-treatment and after-treatment for textile dyeing.

## Revendications

**1.** Agent mouillant à faible pouvoir moussant, consistant en

I) 40 à 70 % en poids d'une ou plusieurs substances de formule

$$R^1O{-}\left(OE\right)_m{-}H \qquad \text{(Ia)},$$

et/ou

$$R^1O{-}\left(OE\right)_n{-}\left(OP\right)_o{-}H \qquad \text{(Ib)},$$

et/ou

$$R^1O{-}\left(OP\right)_p{-}\left(OE\right)_q{-}H \qquad \text{(Ic)},$$

II) 60 à 30 % en poids d'une ou plusieurs substances de formule

$$R^2O{-}\left(OP\right)_r{-}H \qquad \text{(II)},$$

et
III) 0 à 20 % en poids d'une ou plusieurs substances de formule

$$R^3O{-}\left(OE\right)_s{-}H \qquad \text{(III)}$$

les indications de pourcentages se rapportant au poids total de l'agent mouillant, les symboles des formules ayant les significations suivantes :

| | |
|---|---|
| $R^1$ et $R^2$ | représentent des groupes alkyle en $C_4$-$C_{20}$ à chaîne droite ou ramifiée, alcényle en $C_4$-$C_{20}$ ou cycloalkyle en $C_5$-$C_8$, |
| $R^3$ | représente un groupe alkyle en $C_{12}$-$C_{22}$ ou alcényle en $C_{12}$-$C_{22}$ à chaîne droite ou ramifiée, |
| OE et OP | représentent respectivement des motifs d'oxyde d'éthylène et d'oxyde de propylène, |
| m et r | sont égaux chacun, indépendamment l'un de l'autre, à des nombres allant de 1 à 30, de préférence de 1 à 20, |
| n, o, p et q | sont égaux chacun, indépendamment les uns des autres, à des nombres allant de 1 à 10 et |

s est un nombre allant de 15 à 50,

le composant I) présentant en outre un équilibre hydrophile-lipophile ("Hydrophilic-Lipophilic-Balance, HLB") dans l'intervalle de 8 à 16.

**2.** Agent mouillant selon la revendication 1, pour lequel $R^1$ et $R^2$ représentent chacun, indépendamment l'un de l'autre, un groupe alkyle en $C_8$-$C_{16}$.

**3.** Agent mouillant selon la revendication 2, pour lequel $R^1$ et $R^2$ représentent chacun, indépendamment l'un de l'autre, un groupe alkyle en $C_{10}$-$C_{14}$.

**4.** Agent mouillant selon la revendication 1, pour lequel $R^3$ représente un groupe alkyle en $C_{14}$-$C_{20}$ ou alcényle en $C_{14}$-$C_{20}$.

**5.** Agent mouillant selon la revendication 1, dans lequel le composant I) consiste en une ou plusieurs substances de formule (Ia).

**6.** Utilisation des agents mouillants selon la revendication 1 dans des bains aqueux prévus pour des opérations textiles de teinture, de traitement préalable à la teinture, de traitement complémentaire de la teinture, de blanchiment, d'apprêtage, d'hydrofugation, d'oléofugation et d'apprêtage antistatique.

**7.** Utilisation selon la revendication 6, pour la teinture des textiles et les traitements préalables et complémentaires de la teinture des textiles.